# EUROPEAN PATENT SPECIFICATION

(11) **EP 3 423 223 B1**
(45) Date of publication and mention of the grant of the patent: **11.10.2023**
(21) Application number: 17716626.1
(22) Date of filing: 28.02.2017
(51) Int. Cl.: B23B 13/12, B23B 13/08

(54) **JAW-TYPE CENTERING DEVICE FOR BAR LOADERS IN AUTOMATIC LATHES**
BACKENARTIGE ZENTRIERVORRICHTUNG FÜR STANGENZUFÜHRVORRICHTUNGEN BEI AUTOMATISCHEN DREHBANKEN
DISPOSITIF DE CENTRAGE DE TYPE À MÂCHOIRES POUR CHARGEURS DE BARRES DANS DES TOURS AUTOMATIQUES

(30) Priority: 02.03.2016 IT UB20161228
(43) Date of publication of application: 09.01.2019
(73) Proprietor: Drehmag S.r.l., 20030 Senago (MI) (IT)
(72) Inventor: PIROLA, Daniele, I-20144 Milano (IT)
(74) Representative: Lampis, Marco
(86) International application number: PCT/IB2017/051163
(87) International publication number: WO 2017/149449

(56) References cited:
- WO-A1-2009/127682
- CH-A5- 647 968
- DE-U1- 29 500 846
- FR-A- 968 774
- GB-A- 1 063 266
- JP-A- S5 531 566
- KR-A- 20140 120 067
- US-A- 4 034 632

## Description

The present invention relates to a centering device, according to the preamble of claim 1, of the type used in bar loaders for automatic lathes. The invention also relates to a loader with such a centering device, according to the preamble of claim 12.

In the technical sector of bar loaders for single-spindle or multiple-spindle lathes it is known to have to reduce in at least one point the oscillating range of the bar so as to facilitate the machining thereof.

In an automatic lathe-loader system, in fact, the bar to be machined is generally supported at one end by the lathe gripper and at the other end by the loader gripper, while along its entire length it is free to oscillate inside the loader channel and inside the lathe spindle tube.

In many cases, in particular in the case of bars which have a small diameter compared to the diameter of the loader channel through which the bar passes, the oscillation of the bar due to the high speeds of rotation and/or the fact that it is not perfectly straight may make machining very difficult, because of the vibrations generated on the workpiece, or feeding of the bar may even be impossible, with the consequent production of a part which is too short and defective. The introduction of a further point for centering and supporting the bar in an intermediate zone along the bar tends to make the bar more stable, with obvious advantages in terms of machining quality and speed.

For this purpose, the loaders are provided with a device (generally known as "centering device") for supporting and centering the bar, which is generally positioned close to the point where the bar passes between loader and lathe spindle.

The use of the centering device therefore results firstly in greater productivity of the lathe (since a higher speed means a greater number of parts produced), but also in a longer working life of the loader-lathe assembly, since stabilization of the bar always results in a reduction of the vibrations and therefore also a reduction of the stresses on all the components which contain the rapidly rotating bar.

The ideal position of the centering device is immediately behind the lathe spindle and therefore in front of the loader. It is this position, in fact, where the beneficial effects of reducing the oscillating range of the bar are most evident.

The problem of using a centering device is that the diameter of the channel inside the centering device for allowing the passage of the bar must be as small as possible in relation to the diameter of the bar, so as to leave minimum lateral play between bar and channel, so as to reduce the lateral oscillations of the bar. At the same time, however, with a shortening of the bar, the centering device must be able to allow the bar pusher of the loader with its gripper holding the tail end of the bar to pass through. The bar pusher, in fact, has a diameter which is always greater than the diameter of the bar itself and would therefore be prevented from passing through by the constriction represented by the centering device when, during its travel movement for feeding the lathe, it arrives in the vicinity of the centering device itself. Centering devices with a diameter which can be controllably adjusted have therefore been proposed.

For example, EP0826451 describes a centering device composed of a cage structure with a plurality of parallel bars connected in a articulated manner between two torsion rings coaxial with each other. Rotating the rings in opposite directions causes the inclination of the bars and the narrowing or widening of the axial passage between them. This structure, however, is relatively complicated and may form only a very short containing channel, essentially consisting of a circumferential set of points. This is not optimal for reducing the lateral vibrations and may also result in damage to the surfaces of the bar.

Document CH 647 968 A5 discloses a centering device according to the preamble of claim 1.

EP1669145 describes a centering device provided with jaws which are pivotably mounted so as to rotate elastically outwards, against the action of a spring, when the bar pusher passes inside the centering device. In order to prevent the transverse vibrations of the bar being guided from producing an undesirable opening movement of the jaws, the jaws are usually axially retracted inside a containing element so that when the bar pusher encounters the jaws it pushes them firstly outside of the containing element and can then rotate them outwards by pushing against the inclined surfaces of the said jaws. With such a system the movement of the jaws, however, cannot be really controlled, the centering device is suitable for holding with precision a single bar diameter, the bar pusher is not suitably guided when it passes through the centering device and the bars may be retained laterally only over a very short section if an excessive lateral volume of the centering device is to be avoided when the bar pusher passes between the jaws, owing to the petal-like opening system of the said jaws.

Moreover, it is difficult to change the pivotably mounted jaws in order to adapt the centering device to bars with a different diameter and/or cross-sectional form.

Another problem of the centering devices is that a high degree of friction may be generated between the wall of the channel of the centering device and the bar, with consequent rapid wear both of the retaining material of the centering device and the surface of the said bar. This is particularly so in the case of shaped bars, for example with a hexagonal or square cross-section.

In an attempt to solve this problem the centering devices are designed to be freely rotatable about the axis of the bar. However, a certain amount of wear of the elements which form the channel may always occur and periodic replacement of these elements is required. Usually the replacement however requires a long downtime of the loader in order to be able to disassemble the centering device and remove the worn parts.

For example, in the aforementioned patent EP0826451 changing the parts which are worn is complicated and costly, because it involves the replacement of the rods which form the cage of the centering device, which wear at a single point where contact with the bar occurs.

EP1669145 is also complicated to disassemble in order to replace the worn jaws.

Basically, the complex nature of the operation of replacing the retaining parts in the known centering devices makes maintenance, or even only a change in format of the bars, difficult and costly.

FR968774 and GB1063266 disclose centring devices with movable jaws.

The general object of the present invention is to overcome the problems of the prior art by providing a centering device which is able to provide satisfactory control of the size of the guide channel and which can be easily assembled and disassembled for replacement of the bar containing elements.

In view of this object, the idea which has occurred, according to the invention, is to provide a centering device intended for use in an automatic bar loader for a lathe, as claimed in claim 1. In particular, the centering device comprises a channel with a rectilinear axis intended for the passage of a bar from the loader to the lathe and with an inlet end for the bar and an opposite outlet end allowing the bar to exit towards the lathe, comprising mobile jaws on the sides of the channel for defining an adjustable through-aperture in the channel, characterized in that the jaws have thrust surfaces directed towards the inlet end and inside the channel and are mounted on respective sliding guides which guide the jaws for their sliding opening movement in a radial direction relative to the channel in response to a thrust on the thrust surfaces of the jaws in the channel axial direction towards the said outlet end.

A loader with such a centering device and a centering method are also claimed.

In order to illustrate more clearly the present invention and its advantages compared to the prior art, examples of embodiment will be described below with the aid of the accompanying drawings. In the drawings:
- Figure 1 shows a schematic cross-sectional view of a centering device according to the invention;
- Figures 2 and 3 are schematic views of a part of the centering device according to Figure 1;
- Figure 4 shows a schematic, partially exploded, perspective view of the centering device according to the invention;
- Figure 5 shows a schematic, exploded, perspective view of a main part of the centering device according to the invention;
- Figure 6 shows a perspective view of a centering device according to the invention during a disassembly step;
- Figures 7 and 8 show in schematic form a loader for feeding bars to a lathe and using the centering device according to the invention;
- Figures 9, 10 and 11 are schematic and partial views of the centering device during use.

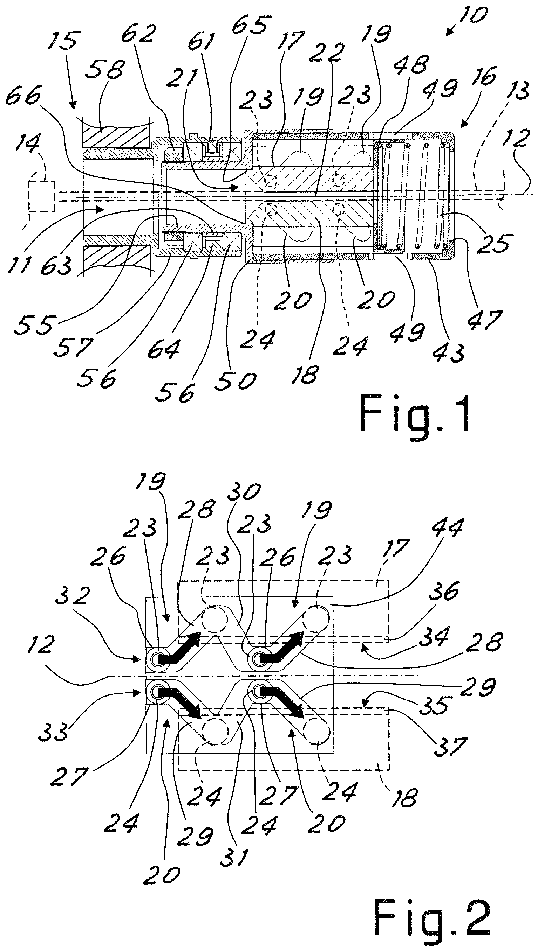

With reference to the figures, Figure 1 shows a schematic cross-section of a supporting and centering device (referred to below in short simply as "centering device"), denoted generally by 10 and realized in accordance with the invention. The centering device is intended to be used in a bar loader for an automatic lathe so as to guide transfer of a bar from the loader to the lathe spindle.

The centering device 10 comprises a channel 11 with a rectilinear axis 12 which is intended for the passage of a bar 13, from the loader to the lathe, and which is supported at its rear end by the gripper of a bar pusher 14 of the loader (known per se) so as to enter from one end 15 of the centering device which is the inlet end for the bar. The opposite front end (not shown) of the bar, after passing through the centering device 10 and exiting from an opposite end 16 of the centering device, is fed to the lathe for machining. The channel 11 is obviously suitable also for allowing the bar pusher to pass through.

Between the inlet and outlet, the centering device comprises mobile jaws 17 and 18 which are arranged radially on the sides of the channel 11 so as to define an adjustable through-aperture in the said channel through which the bar passes so that it is laterally retained and lateral oscillations and deviations therefore are reduced.

The jaws 17 and 18 are mounted on respective sliding guides 19 and 20 which guide the said jaws so as to obtain a sliding opening movement thereof in a direction radial to the channel 11 in response to a thrust on the jaws imparted in an axial direction of the channel 11 and directed towards the outlet end 16. This thrust will be produced in general by the bar pusher 14 when its front end enters into the centering device and reaches the front face 21 of the jaws, namely the face of the jaws which is directed towards the inlet 15.

Below, the terms "front" and "rear" will in general refer to the direction of the bar from the loader to the lathe (from left to right in Figure 1).

As can be seen again in Figure 1, the jaws advantageously extend along the channel 11 in a direction parallel to the axis 12 of the channel and, when they move closer together, they define between then a relatively narrow passage 22 which is coaxial with the axis 12 of the channel 11 for passage of a bar and which accommodates the bar with minimum lateral play and extends in the axial direction so as to retain the bar with a uniform action along its section.

In the embodiment illustrated by way of example of the invention, the jaws are preferably in two in number, facing each other on opposite sides of the channel 11 for a movement away from each other in opposite directions in a longitudinal plane of the channel (the plane of the drawing in Figure 1).

The jaws preferably slide inside the respective guides by means of sliders 23 and 24 which project from opposite sides of each jaws, as will become clear below.

The sliders are advantageously seated with minimum lateral play inside the guides so as to avoid undesirable oscillations of the jaws in the direction transverse to the guides.

Owing to the guides 19, 20, the jaws may move between a first retracted position (shown in Figure 1), closer to the inlet end 15, in which the jaws are closer to the channel axis, and a second advanced position, closer to the outlet end 16, in which the jaws are in a position where they have a greater radial opening (as for example schematically shown in broken lines in Figure 2).

The movement of the jaws from the first position into the second position may be performed advantageously against the thrust of elastic means, for example a helical spring 25, preferably arranged coaxial with the axis 12 of the channel.

Moreover, the sliding guides may be advantageously formed so that each jaw 17 and 18 slides along the respective guides 19 or 20 while remaining parallel to itself during the movement. As a result the bars may be better guided in any condition and the transverse dimension of the centering device may be kept small.

Figure 2 shows in schematic form a possible advantageous embodiment of the guides 19 and 20 (the figures show only the guides on one side of the jaws, but the guides on the opposite side will generally be a mirror image thereof).

As shown in Figure 2, the sliding guides 19 and 20 comprise a first portion 26, 27 which is parallel to the axis 12 of the channel and inside which the sliders 23, 24 (shown in solid lines) are located when the jaws are in their first position, and a second portion 28, 29, which is inclined with respect to the axis of the channel and inside which the sliders of the jaws slide during the movement of the jaws between first and second positions so as to move the jaws in the radial direction towards and away from each other, until they reach the end of the respective inclined portion 28, 29 (as shown in broken lines in Figure 2).

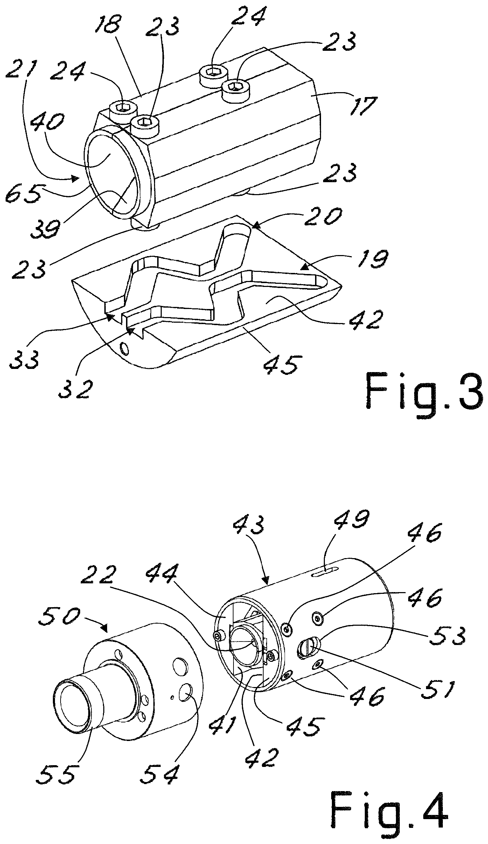

Preferably, as can be clearly seen for example again in Figure 2 and Figure 3, each jaw may have two sliders 23, 24 on each side for engaging inside two corresponding sliding guides 19, 20 on each side. These two guides may be advantageously arranged in sequence along the channel 11.

The first straight portion of the guides acts in such a way that, in the working position of the centering device (namely when the jaws are in the first position), the jaws oppose the lateral forces generated by the rotating bars and cannot move away owing to these lateral forces.

In addition or instead of this, the jaws have rear ends which are inserted in a precise seat in the body of the centering device and which keep the jaws close together until the axial sliding movement forwards, caused by the thrust of the bar pusher which has reached the centering device, disengages them from this precise seat and the jaws move away from each other following the paths imposed by the guides. This is visible for example in Figure 1, where a small-diameter end 65 of the jaws is pushed inside a seat 66 by the spring 25.

As can be seen again in Figure 2, the sliding guide 19, 20 furthest from the inlet end 15 has advantageously the first portion 26, 27 which is connected, by means of a connecting section 30, 31, to a terminal end of the second inclined portion 28, 29 of the sliding guide closer to the inlet end.

In this way the two sliding guides 28 or 29 on one side of each jaw form a single continuous groove. This continuous groove has preferably a terminal end 32, 33 which is open or can be opened in an axial direction relative to the channel so as to allow the jaws to be axially extracted from the centering device, by causing the respective sliders to travel inside the continuous groove as far as said terminal end 32 or 33.

As schematically shown again in Figure 2, in the example of embodiment with two jaws, the jaws are advantageously arranged facing each other on the opposite sides of the channel with their surfaces 34, 35 which move parallel close to one another when the jaws are in the first position and which each have a groove 36, 37 which extends parallel to the axis of the channel so as to form, when they are close together in a parallel position, the aforementioned passage 22 coaxial with the channel.

As can be clearly seen also in Figure 3, the rear ends 21 of the jaws (namely the end where the bar fed by the loader arrives) have thrust surfaces 39, 40, inside the channel, against which the gripper pushes. These surfaces may be inclined so as to form a receiving cone at the inlet between the jaws. Preferably, the width of the receiving cone will be chosen larger than the size of the head of the loader gripper so that the gripper may slide easily between the jaws while the latter open.

Again in Figure 3 it can be seen how the jaws are preferably shaped so that when they move together they form an elongated solid which extends in the direction of the axis 12 of the channel and which can be generally inscribed in a cylinder with an axis parallel to the axis 12.

As can be clearly seen also in Figure 4, the two jaws are inserted between walls 41 and 42 which have the sliding guides. These walls are preferably parallel to each other and parallel also to the axis 12 and to the directions of axial radial and radial movement of the jaws. The jaws thus move along the guides parallel to the walls 41 and 42.

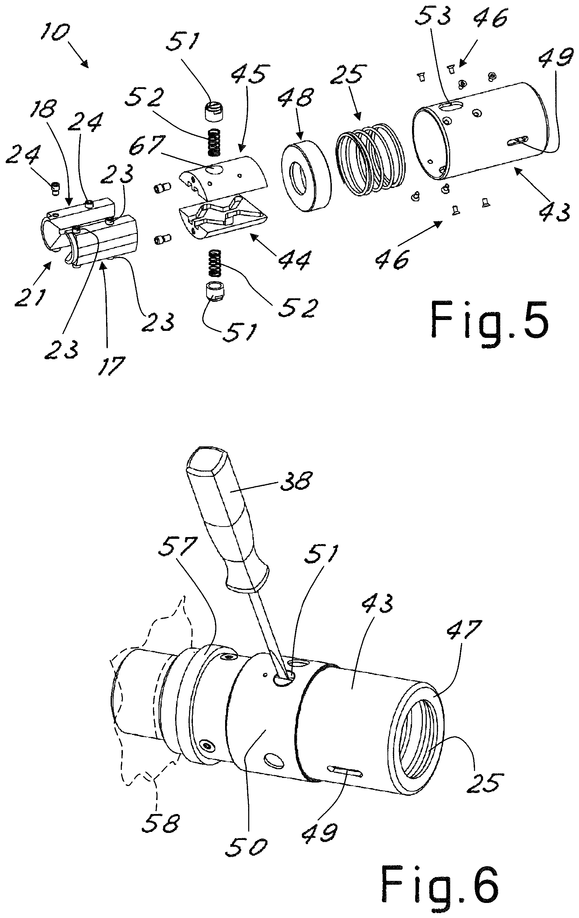

As can be clearly seen also in Figures 4 and 5, the centering device may advantageously comprise an outer cylindrical housing 43 which has its axis directed in the same manner as the axis 12 of the channel and which contains two guide elements 44, 45 which are fixed onto the inner wall of the housing on opposite sides of the channel so as to have opposite surfaces which form the walls 41, 42 inside which the sliding guides for the jaws are present.

The two guide elements 44 and 45 are advantageously each formed as a cylinder segment so as to engage with the inner cylindrical wall of the housing 43 and be fixed to the latter for example by means screws 46 which enter from the outside through the wall of the housing.

Towards the outlet end 16 the housing 43 may advantageously have a peripheral edge 47 which is directed towards the axis of the channel at the end 16 where the bar exits towards the lathe and on which a first end of the spring 25 for elastically pushing the jaws towards their closed retracted position rests.

As can be clearly seen in Figures 1 and 5, the housing may also contain advantageously a slidable annular slider 48 which is arranged coaxial with the channel and on which the other end of the spring 25 rests so as to push the jaws through the slider. The surface of the slider directed towards the jaws may be chosen with a small degree of friction so as to allow easy radial sliding of the jaws.

Advantageously, the slider 48 is visible through at least one suitable window 49 on the side wall of the housing of the centering device so that, looking at the advanced or retracted position of the slider through the window 49, the open (advanced) jaws condition or closed (retracted) jaws condition can be identified from the outside.

The housing 43 of the centering device is advantageously closed at its end towards the inlet end 15 by means of a closing element 50 which has a central passage around the channel and which is connected removably onto the housing by means of a suitable fastening means which can be released so as to allow removal thereof and subsequent extraction of the jaws 20 from the housing.

As shown for example in Figure 1, the closing element may also form the seat 66 which opposes the radial separating movement of the jaws when they are in their retracted operating position.

The means for fastening together the housing and the closing element may be for example removable screws, or other known systems, but it is preferable for them to be of the snapengaging, for example spring-loaded, type.

Advantageously, the closing element 50 may also be an element for supporting the centering device on the loader and a quick separation mode is therefore preferable.

The separation of the closing element from the rest of the centering device allows in this case the body of the centering device to be rapidly removed from the loader, for example for maintenance thereof and/or for replacement of the jaws because they are worn or in order to change them when there is a change in shape or diameter of the bars being fed.

In particular, as can be clearly seen for example in the exploded view of Figure 5, the fastening means may be advantageously realized so as to comprise at least one engaging element 51 (two elements in the example of embodiment, arranged radially opposite each other) which is pushed with a spring 52 towards the outside of the housing 43 so as to project from the side surface of the housing through a hole 53 and engage elastically inside a corresponding hole 54 present in a side wall of the closing element 50 which is cup-shaped so as to receive partially a rear end of the housing 43 with minimum lateral play. The engaging elements with the associated springs may be advantageously housed inside special radial seats (one of which, indicated by 67, is shown in Figure 5, the other one being identical), said seats being formed in the elements 44 and 45.

In this way, the closing element is snap-engaged onto the housing 43 and a simple pressure applied onto the engaging elements 51 so as to push them inwards (applied for example manually) allows them to be disengaged from the holes 54 and the closing element to be separated from the housing 43.

Advantageously it may also be preferably envisaged that the spring-loaded engaging elements 51 are axially rotatable (for example by means of a screwdriver 38, as shown in Figure 6, which engages inside a special slot in the head of the engaging element) so as to displace them between a first angular position, in which they elastically project from the holes 53, and a second angular position, where they are kept stably retracted inside the housing. This may be particularly useful if several spring-loaded engaging elements are provided around the circumference of the centering device and/or the centering device has a diameter which is too large for it be easily extracted while keeping the fingers of one hand pressed on the engaging elements. It is thus easy to operate one engaging element at a time so as to lock them in their stable retracted position and then remove the centering device from the closing element 50.

In order to obtain the stable retracted position, the engaging elements (as can be seen again in Figure 5) may be shaped (for example with two opposite lateral grooves on their head) so that the head is narrower than the openings 53 in the first angular position and may thus project elastically from the openings and is instead wider than these openings 53 in the second angular position and may thus remain inside the openings without projecting from them once the insert has been pressed and rotated.

Advantageously, in order to realize the supporting function by means of the closing element, it is envisaged that the closing element may comprise a hollow shank 55 extending coaxial with the channel in the opposite direction to the housing 43. A fixing bushing 57 is mounted onto this shank 55, via rolling means 56 (for example bearings), said bushing being intended for mounting the centering device between loader (indicated by 58 in Figure 1) and lathe. In this way, the entire centering device is freely rotatable about the axis 12 and if necessary may therefore follow rapid rotation of the bar machined by the lathe.

A ring 62 may be for example advantageously provided for rotatable mounting of the element 50 and the fixing bush 57, said ring being screwed onto the (threaded) end of the shank 55 so as to compact the ball bearings 56 by means of an inner contact race 63 and an outer contact race 64. This assembly is then inserted into the bush 57 and fixed in position by means of radial screws 61 which engage inside threaded seats of the outermost race 64.

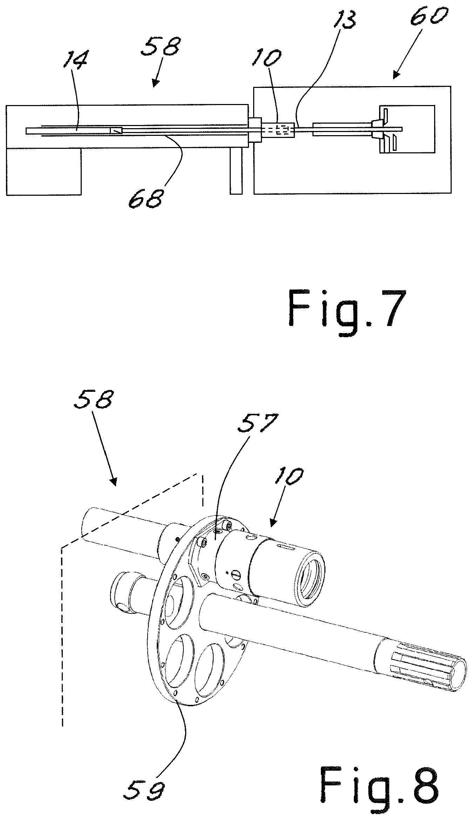

Obviously, the fixing bush 57 may have forms and fixing systems different from those shown in the Figure, for example depending on the lathe and the loader onto which it is to be fixed, as may be easily imagined by the person skilled in the art. Figure 8 shows an example of this. The supporting and closing functions of the centering device may in any case also be separate, as may be now easily imagined by the person skilled in the art, for example by mounting a flat annular lid at the end of the housing which is to be closed and then mounting the entire assembly on a rotatable support which may also be similar to the element 50 shown in the figures.

As schematically shown in Figure 7, the centering device 10 may be mounted on the end of an automatic loader 58 so as to be aligned with the channel 68 of the loader which feeds the bars 13 towards the lathe 60 by means of the bar pusher 14 which is suitably motor-driven.

The loader and the lathe are known per se and will not be further described or shown here, these being able to be easily imagined by the person skilled in the art. For example, the loader will be provided with a suitable known magazine for sequential removal of the bars to be loaded into the bar pusher(s) 14. The lathe may be of the single-spindle or multiple-spindle type and the loader may also be designed to feed one or more bars simultaneously. In the case of a multiple loader, centering devices 10 may be used at each outlet of the loader.

Figure 8 shows for example in schematic form a head part of a multiple loader for rotation of a plurality of centering devices (for simplicity only one is shown in the Figure) in synchronism with rotation of the bars of the loader. This head part comprises a disc 59 which axially rotates together with the spindles of the lathe and the guides of the loader and which has seats for mounting the centering devices (via the suitably shaped ring 57) arranged circumferentially on the disc so as to feed the plurality of bars in a guided manner to the lathe.

At this point it is clear how the predefined objects have been achieved.

Owing to the centering device according to the invention, the bars may be conveniently centered and supported along a section of their length so as to not transmit harmful vibrations to the lathe.

Moreover, owing to the structure and movement of the jaws, varying types and diameter of bars may be always suitably seated and supported in the centering device. In particular, owing to the extension of the jaws with a shaped passage between them, the centering device is particular suitable for bars which have a relatively small diameter and therefore have a high lateral flexibility and therefore require a better supporting, containing and centering action. Generally, in fact, small bars are those which require an additional centering action, being more flexible and having available a greater oscillation space within the loader channel.

The centering device according to the invention can be advantageously used with bars which have a diameter even smaller than about two thirds of the diameter of the loader channel; for example, for a loader with channel 30, the centering device may be suitable for handling bars up to diameter 20 (or hexagonal socket 20). In any case, larger diameters may also be handled by designing the jaws with suitable dimensions. Moreover, by suitably shaping the passage in the jaws, it is possible to handle also bars with a square or more complex cross-section.

In general, for each diameter (or polygonal socket) it is possible use a pair of specific jaws which can be easily replaced and which ensure, for example, not more than about 0.5 mm of air between jaws and bar. In the event of round bars it is also possible to use slightly wider jaws, while in the case of polygonal (for example hexagonal) bars it is preferable for the fit to be relatively precise so as to ensure that the centering device is rotated by the polygonal bar and prevent rapid wear of the jaws due to the presence of the edges on the polygonal bar.

Basically, the bar centering device according to invention is able to ensure in an efficient and flexible manner a limitation of possible oscillation range of the fed bar, but at the same time, when the bar is shortened, it does not form an obstacle for the advancing movement of the bar pusher, which usually has a diameter equal to the diameter of the channel in the loader and therefore necessarily larger than the diameter of the bar itself. Adjustments for the passage of the bar pusher are advantageously performed in a completely automatic manner without the need for external actuating devices, as instead required by most of the centering devices according to the prior art.

The jaws may also be rapidly and easily replaced, for example so as to adapt the passage between the jaws to different types of bar and thus keep the bar perfectly supported.

Once the body of the centering device has been released from the closing element, the jaws may easily slide axially so that they can be extracted from their seats, inspected and if necessary replaced. In the preferred case of engaging means which involve the snapengagement of the body of the centering device onto the support fixed to the loader, rapid disassembly and reassembly may also performed with minimum or no use of tools.

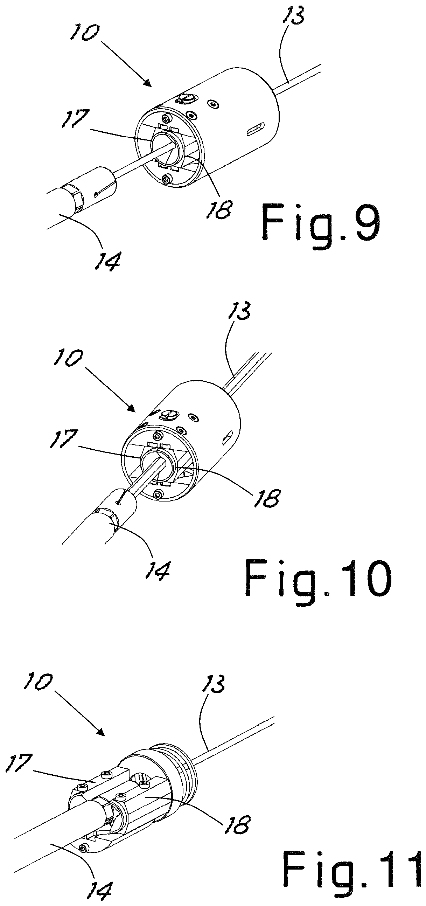

By way of example, Figures 9 and 10 show the centering device (for the sake of clarity with the closing element removed) with jaws having the passage suitable for a small-diameter circular bar (Figure 9) or with jaws having the passage suitable for a larger-diameter polygonal bar (Figure 10). In this latter case, the passage formed by the two adjacent jaws will also be polygonal so as to match the profile of the bar and reduce the play during the rapid rotation of the centering device together with the bar. At the same, square bars or bars with another profile may also be handled by mounting jaws with a suitable shape of the passage.

The jaws, which define in centre thereof a diameter which is slightly bigger than that of the bar, guide the bar during machining, preventing it from oscillating inside the loader channel and in the lathe spindle. When the head end of the bar pusher reaches the centering device the jaws will be pushed forwards by the bar pusher and will move radially away from each other so as to allow the bar pusher to pass through towards the lathe. This is shown by way of example in Figure 11, where parts of the centering device have been removed so as to show the jaws in their open position with the bar pusher inserted between them.

Once the bar has passed through completely, the bar pusher will move back leaving the jaws free to return into the closing position pushed by the spring and ready to receive a new bar.

Obviously the description provided above of embodiments of the present invention is provided by way of example and must therefore not be regarded as limiting the scope of the rights claimed herein. For example, depending on the specific practical requirements, the dimensions and the proportions of the various parts of the centering device may vary with respect to that shown. Depending on the specific trajectory required for the jaws, the guides for the movement of the jaws may also be different from those shown.

The materials used for manufacture of the various parts may also vary depending on the specific practical requirements, even though it has been found to be advantageous to make the cylindrical housing of the centering device and the jaws from plastic and the closing element, which forms the element for supporting the centering device, together with the associated bush with the bearings, from metal. The guide elements may also be made of plastic suitable for sliding of the sliders and the jaws with a small amount of friction. The sliders of the jaws may instead be advantageously made of metal, for example formed by cylindrical heads of screws screwed into the jaws.

## Claims

1. Centering device (10) intended for use in an automatic bar loader for a lathe, comprising a channel (11) with a rectilinear axis (12), intended for the passage of a bar from the loader to the lathe and with an inlet end (15) for the bar and an opposite outlet end (16) allowing the bar to exit towards the lathe, comprising mobile jaws (17, 18) on the sides of the channel (11) for defining an adjustable through-aperture in the channel, wherein the jaws (17, 18) have thrust surfaces (39, 40) directed towards the inlet end (15) and inside the channel (11) and are mounted on respective sliding guides (19, 20) of the centering device which are configured to guide the jaws for their sliding opening movement in a direction radial to the channel (11) in response to a thrust on the thrust surfaces (39, 40) of the jaws in the channel axial direction towards the said outlet end (16),
**characterized in that** the jaws (17, 18) are movable between a first position, closer to the inlet end (15), in which they are closer to the axis of the channel, and a second position, closer to the outlet end (16), in which they are in a wider radial opening position, wherein the sliding guides (19, 20) comprise a first portion (26, 27) which is parallel to the axis of the channel and inside which sliders (23, 24) of the jaws (17, 18) are located when the jaws are in their first position and a second portion (28, 29), which is inclined with respect to the axis of the channel and in which the sliders (23, 24) of the jaws (17, 18) slide during the movement of the jaws between the first and second positions, wherein the jaws (17, 18) in the first position engaging in a seat (65), which oppose the mutual spacing movement of the jaws (17, 18) in the radial direction, and/or
wherein the jaws (17, 18) in the first position engaging in the first portion (26, 27) of the sliding guides (19, 20), which oppose the mutual spacing movement of the jaws (17, 18) in the radial direction.

2. Centering device according to claim 1, **characterized in that** the jaws (17, 18) extend along the channel in a direction parallel to the axis of the channel and the slide guides are shaped so that each jaw (17, 18) slides along the respective guides remaining parallel to itself during the movement.

3. Centering device according to claim 1, **characterized in that** a spring (25) of the centering device is elastically pushing the jaws (17, 18) towards the first position.

4. Centering device according to claim 1, **characterized in that** each jaw (17, 18) slides in the respective guides (19, 20) by means of sliders (23, 34) that protrude from opposite sides of the jaw.

5. Centering device according to claim 1, **characterized in that** the jaws (17, 18) are two in number, facing each other on opposite sides of the channel with their surfaces which move closer together, parallel to each other, when the jaws (17, 18) are in the first position and which each have a groove (36, 37) which extends parallel to the axis of the channel so as to form a passage (22) coaxial with the channel when they are close together.

6. Centering device according to claim 1, **characterized in that** each jaw (17, 18) has two sliders (23, 24) on each side, designed to engage in two corresponding sliding guides on each side.

7. Centering device according to claim 6, **characterized in that** the two sliding guides (19, 20) on each side of a jaw (17, 18) are arranged in sequence along the channel and with the sliding guide farthest from the inlet end which has said first portion (26, 27) connected to a terminal end of said second inclined portion (28, 29) of the sliding guide closer to inlet end (15), so that said two sliding guides constitute a single groove, the groove having a terminal end (32, 33) which is open or can be opened in the axial direction of the channel so as to allow the jaws (17, 18) to manually come out of the centering device by sliding with the respective sliders (23,24) along the said single groove as far as and beyond said terminal end (32, 33).

8. Centering device according to claim 1, **characterized in that** it comprises a cylindrical housing (43) with its axis directed the same manner as the axis of the channel and containing two guide elements (44, 45) which are fixed on the inner wall (43) of the housing (43) on opposite sides of the channel so as to have oppositely arranged surfaces in which the sliding guides for the jaws (17, 18) are present, with the jaws which are located between said two guide elements (44, 45) so as to engage slidably in the sliding guides and move along the guides in directions which are parallel to said opposite surfaces of the two guide elements (44, 45).

9. Centering device according to claims 3 and 8, **characterized in that** the housing (43) has towards the outlet end (16) of the bar a peripheral edge (47) which is directed towards the channel axis and on which a first end of the spring (25), arranged coaxial with the channel, rests, the housing containing a slidable annular slider (48), which is arranged coaxial with the channel and on which the other end of the spring (25) rests so as to push with the slider (48) the jaws toward their first position.

10. Centering device according to claim 8, **characterized in that** on one end of the housing (43) towards the inlet end (15) there is a closing element (50) which has a central passage around the channel (11) and which is connected removably to the housing (43) by means of releasable fastening means (51, 54).

11. Centering device according to claim 10, **characterized in that** the fastening means comprise at least one engaging element (51) which is spring-biased towards the outside of the housing (43) so as to protrude from a side surface of the housing and engage elastically in a hole (54) present in a wall of the closing element (50) partially accommodated by the housing (43) within itself, and/or **in that** the closing element (50) comprises a hollow shank (55) which extends coaxial with the channel in the opposite direction to the housing (43) and which carries, via rolling means (56), a bushing (57) intended for axially rotatable mounting of the centering device.

12. Automatic loader (58) for feeding bars (13) to a lathe (60), comprising a centering device (10) which is mounted at the end of a channel (68) of the loader which is intended to feed a bar (13) towards the lathe, **characterized in that** the centering device (10) is designed according to any one of the preceding claims to guide bars (13) pushed by a bar pusher (14) of the loader (58) along the channel (68) of the loader and allow the passage of the bar pusher between the jaws (17, 18) of the centering device (10) by means of a radial movement of the jaws (17, 18) upon the axial thrust of the bar pusher (14) against the jaws (17, 18).

13. Method for centering a bar in a centering device (10) made according to any one of the preceding claims and arranged between a bar loader and a lathe, comprising the steps of positioning the said centering device (10) between loader and lathe with the jaws close together so as to have the said adjustable aperture which is smaller than the diameter of a gripper (14) of the loader which pushes a bar (13) through the centering device and, upon arrival of the gripper (14) inside the centering device, to push with the gripper (14) against the thrust surfaces (39, 40) of the jaws so as to open the jaws and allow the guided passage of the gripper (14) through the centering device.

## Patentansprüche

1. Zentriervorrichtung (10) zur Verwendung in einem automatischen Stangenlader für eine Drehbank, umfassend einen Kanal (11) mit einer geradlinigen Achse (12), um eine Stange aus dem Lader zu der Drehbank hindurchzuführen, und mit einem Eintrittsende (15) für die Stange und einem gegenüberliegenden Austrittsende (16), das das Austreten der Stange hin zu der Drehbank ermöglicht, umfassend mobile Backen (17, 18) an den Seiten des Kanals (11) zum Definieren einer verstellbaren Durchtrittsöffnung in dem Kanal, wobei die Backen (17, 18) Anlaufflächen (39, 40) aufweisen, die hin zu dem Eintrittsende (15) und innerhalb des Kanals (11) ausgerichtet sind und auf jeweiligen Gleitführungen (19, 20) der Zentriervorrichtung befestigt sind, die so konfiguriert sind, dass sie die Backen als Reaktion auf einen Anlauf auf den Anlaufflächen (39, 40) der Backen in der Kanalaxialrichtung hin zu dem Austrittsende (16) für deren Gleitöffnungsbewegung in eine Richtung radial zu dem Kanal (11) führen,
**dadurch gekennzeichnet, dass** die Backen (17, 18) zwischen einer ersten Position näher an dem Eintrittsende (15), in der sie näher an der Achse des Kanals vorliegen, und einer zweiten Position näher an dem Austrittsende (16) beweglich sind, in der sie in einer Position mit breiterer radialer Öffnung vorliegen, wobei die Gleitführungen (19, 20) einen ersten Abschnitt (26, 27), der parallel zu der Achse des Kanals verläuft und in dem Gleitelemente (23, 24) der Backen (17, 18) angeordnet sind, wenn sich die Backen in ihrer ersten Position befinden, und einen zweiten Abschnitt (28, 29) umfassen, der in Bezug auf die Achse des Kanals geneigt ist und in dem die Gleitelemente (23, 24) der Backen (17, 18) während der Bewegung der Backen zwischen der ersten und der zweiten Position gleiten, wobei die Backen (17, 18) in der ersten Position mit einem Sitz (65) in Eingriff stehen, der der Auseinanderbewegung der Backen (17, 18) in der radialen Richtung in Bezug aufeinander entgegenwirkt, und/oder wobei die Backen (17, 18) in der ersten Position mit dem ersten Abschnitt (26, 27) der Gleitführungen (19, 20) in Eingriff stehen, die der Auseinanderbewegung der Backen (17, 18) in der radialen Richtung in Bezug aufeinander entgegenwirken.

2. Zentriervorrichtung nach Anspruch 1, **dadurch gekennzeichnet, dass** sich die Backen (17, 18) entlang des Kanals in einer Richtung parallel zu der Achse des Kanals erstrecken und die Gleitführungen so ausgebildet sind, dass jede Backe (17, 18) entlang der jeweiligen Führungen gleitet, wobei sie während der Bewegung zu sich selbst parallel bleibt.

3. Zentriervorrichtung nach Anspruch 1, **dadurch gekennzeichnet, dass** eine Feder (25) der Zentriervorrichtung die Backen (17, 18) elastisch hin in die erste Position schiebt.

4. Zentriervorrichtung nach Anspruch 1, **dadurch gekennzeichnet, dass** jede Backe (17, 18) durch Gleitelemente (23, 24), die von gegenüberliegenden Seiten der Backe vorstehen, in den jeweiligen Führungen (19, 20) gleitet.

5. Zentriervorrichtung nach Anspruch 1, **dadurch gekennzeichnet, dass** zwei Backen (17, 18) vorliegen, die einander auf gegenüberliegenden Seiten des Kanals zugewandt sind, wobei sich ihre Oberflächen näher zueinander, parallel zueinander bewegen, wenn sich die Backen (17, 18) in der ersten Position befinden, und die jeweils eine Nut (36, 37) aufweisen, die sich parallel zu der Achse des Kanals erstrecken, um einen Durchlass (22) koaxial zu dem Kanal zu bilden, wenn sie nahe beieinander sind.

6. Zentriervorrichtung nach Anspruch 1, **dadurch gekennzeichnet, dass** jede Backe (17, 18) zwei Gleitelemente (23, 24) auf jeder Seite aufweist, die so ausgestaltet sind, dass sie mit zwei entsprechenden Gleitführungen auf jeder Seite in Eingriff gelangen.

7. Zentriervorrichtung nach Anspruch 6, **dadurch gekennzeichnet, dass** die zwei Gleitführungen (19, 20) auf jeder Seite einer Backe (17, 18) aufeinanderfolgend entlang des Kanals angeordnet sind und wobei die Gleitführung, die von dem Eintrittsende am weitesten entfernt liegt, einen ersten Abschnitt (26, 27) aufweist, der mit einem Abschlussende des zweiten geneigten Abschnitts (28, 29) der näher an dem Eintrittsende (15) liegenden Gleitführung verbunden ist, so dass die zwei Gleitführungen eine einzelne Nut darstellen, wobei die Nut ein Abschlussende (32, 33) aufweist, das in der axialen Richtung des Kanals offen ist oder geöffnet werden kann, um zu ermöglichen, dass die Backen (17, 18) manuell aus der Zentriervorrichtung austreten, indem sie mit den jeweiligen Gleitelementen (23, 24) entlang der einzelnen Nut bis zu dem Abschlussende (32, 33) und über dieses hinaus gleiten.

8. Zentriervorrichtung nach Anspruch 1, **dadurch gekennzeichnet, dass** sie ein zylindrisches Gehäuse (43) umfasst, dessen Achse auf die gleiche Weise wie die Achse des Kanals ausgerichtet ist und das zwei Führungselemente (44, 45) enthält, die an der Innenwand (43) des Gehäuses (43) auf gegenüberliegenden Seiten des Kanals fixiert sind, um gegenüber angeordnete Oberflächen aufzuweisen, in denen die Gleitführungen für die Backen (17, 18) vorhanden sind, wobei die Backen zwischen den zwei Führungselementen (44, 45) angeordnet sind, um mit den Gleitführungen in Gleiteingriff zu gelangen und sich entlang der Führungen in Richtungen parallel zu den gegenüberliegenden Oberflächen der zwei Führungselemente (44, 45) zu bewegen.

9. Zentriervorrichtung nach den Ansprüchen 3 und 8, **dadurch gekennzeichnet, dass** das Gehäuse (43) hin zu dem Austrittsende (16) der Stange eine Umfangskante (47) aufweist, die hin zu der Kanalachse ausgerichtet ist und auf der ein erstes Ende der Feder (25) aufliegt, das koaxial zu dem Kanal angeordnet ist, wobei das Gehäuse ein gleitfähiges ringförmiges Gleitelement (48) enthält, das koaxial zu dem Kanal angeordnet ist und auf dem das andere Ende der Feder (25) aufliegt, um die Backen mit dem Gleitelement (48) hin in deren erste Position zu schieben.

10. Zentriervorrichtung nach Anspruch 8, **dadurch gekennzeichnet, dass** ein Schließelement (50) an einem Ende des Gehäuses (43) hin zu dem Eintrittsende (15) vorliegt, das um den Kanal (11) einen zentralen Durchlass aufweist und das durch ein lösbares Befestigungsmittel (51, 54) lösbar mit dem Gehäuse (43) verbunden ist.

11. Zentriervorrichtung nach Anspruch 10, **dadurch gekennzeichnet, dass** das Befestigungsmittel wenigstens ein Eingriffselement (51) umfasst, das hin zu der Außenseite des Gehäuses (43) vorgespannt ist, um von einer Seitenfläche des Gehäuses vorzustehen und elastisch mit einem Loch (54) in Eingriff zu gelangen, das in einer Wand des Schließelements (50) vorhanden ist, das teilweise von dem Gehäuse (43) innerhalb sich selbst aufgenommen ist, und/oder dass das Schließelement (50) einen Hohlschaft (55) umfasst, der sich koaxial zu dem Kanal in der entgegengesetzten Richtung zu dem Gehäuse (43) erstreckt und der über ein Rollmittel (56) eine Buchse (57) zur axial drehbaren Befestigung der Zentriervorrichtung trägt.

12. Automatischer Lader (58) zum Zuführen von Stangen (13) zu einer Drehbank (60), umfassend eine Zentriervorrichtung (10), die an dem Ende eines Kanals (68) des Laders befestigt ist, um eine Stange (13) hin zu der Drehbank hindurchzuführen, **dadurch gekennzeichnet, dass** die Zentriervorrichtung (10) nach einem der vorstehenden Ansprüche ausgestaltet ist, um Stangen (13), die von einem Stangenschieber (14) des Laders (58) geschoben werden, entlang des Kanals (68) des Laders zu führen und zu ermöglichen, dass der Stangenschieber zwischen den Backen (17, 18) der Zentriervorrichtung (10) durch eine radiale Bewegung der Backen (17, 18) bei dem axialen Anlauf des Stangenschiebers (14) gegen die Backen (17, 18) hindurchläuft.

13. Verfahren zum Zentrieren einer Stange in einer Zentriervorrichtung (10), die nach einem der vorstehenden Ansprüche hergestellt und zwischen einem Stangenlader und einer Drehbank angeordnet ist, umfassend die Schritte des Positionierens der Zentriervorrichtung (10) zwischen dem Lader und der Drehbank, wobei die Backen nahe beieinander liegen, um die verstellbare Öffnung aufzuweisen, die kleiner als der Durchmesser eines Greifers (14) des Laders ist, der eine Stange (13) durch die Zentriervorrichtung schiebt, und um, wenn der Greifer (14) in Inneren der Zentriervorrichtung angelangt, mit dem Greifer (14) gegen die Anlaufflächen (39, 40) der Backen zu schieben, so dass die Backen geöffnet werden und das geführte Hindurchführen des Greifers (14) durch die Zentriervorrichtung ermöglicht wird.

## Revendications

1. Dispositif de centrage (10) prévu pour être utilisé dans un chargeur de barres automatique pour un tour, comprenant un canal (11) ayant un axe rectiligne (12), prévu pour le passage d'une barre depuis le chargeur vers le tour et avec une extrémité d'entrée (15) pour la barre et une extrémité de sortie opposée (16) permettant à la barre de sortir vers le tour, comprenant des mâchoires mobiles (17, 18) sur les côtés du canal (11) pour définir une ouverture débouchante ajustable dans le canal, dans lequel les mâchoires (17, 18) ont des surfaces de poussée (39, 40) dirigées vers l'extrémité d'entrée (15) et à l'intérieur du canal (11) et sont montées sur des guides coulissants respectifs (19, 20) du dispositif de centrage qui sont configurés pour guider les mâchoires pour leur mouvement d'ouverture coulissante dans une direction radiale vers le canal (11) en réponse à une poussée sur les surfaces de poussée (39, 40) des mâchoires dans la direction axiale du canal vers ladite extrémité de sortie (16), **caractérisé en ce que** les mâchoires (17, 18) sont mobiles entre une première position, plus proche de l'extrémité d'entrée (15), dans laquelle elles sont plus proches de l'axe du canal, et une seconde position, plus proche de l'extrémité de sortie (16), dans laquelle elles sont dans une position d'ouverture radiale plus large, dans laquelle les guides coulissants (19, 20) comprennent une première partie (26, 27) qui est parallèle à l'axe du canal et à l'intérieur de laquelle des glissières (23, 24) des mâchoires (17, 18) sont situées lorsque les mâchoires sont dans leur première position et une seconde partie (28, 29), qui est inclinée par rapport à l'axe du canal et dans laquelle les glissières (23, 24) des mâchoires (17, 18) coulissent pendant le mouvement des mâchoires entre les première et seconde positions, dans lequel les mâchoires (17, 18) dans la première position se mettent en prise à l'intérieur d'un siège (65), qui s'oppose au mouvement d'espacement mutuel des mâchoires (17, 18) dans la direction radiale, et/ou
dans lequel les mâchoires (17, 18) dans la première position se mettent en prise à l'intérieur de la première partie (26, 27) des guides coulissants (19, 20), qui s'opposent au mouvement d'espacement mutuel des mâchoires (17, 18) dans la direction radiale.

2. Dispositif de centrage selon la revendication 1, **caractérisé en ce que** les mâchoires (17, 18) s'étendent le long du canal dans une direction parallèle à l'axe du canal et les guides coulissants sont formés de sorte que chaque mâchoire (17, 18) coulisse le long des guides respectifs en restant parallèle à elle-même pendant le mouvement.

3. Dispositif de centrage selon la revendication 1, **caractérisé en ce qu'** un ressort (25) du dispositif de centrage pousse élastiquement les mâchoires (17, 18) vers la première position.

4. Dispositif de centrage selon la revendication 1, **caractérisé en ce que** chaque mâchoire (17, 18) coulisse dans les guides respectifs (19, 20) au moyen de glissières (23, 34) qui font saillie des côtés opposés de la mâchoire.

5. Dispositif de centrage selon la revendication 1, **caractérisé en ce que** les mâchoires (17, 18) sont au nombre de deux, se faisant face de part et d'autre du canal avec leurs surfaces qui se rapprochent ensemble, parallèlement l'une de l'autre, lorsque les mâchoires (17, 18) sont dans la première position et qui présentent chacune une rainure (36, 37) qui s'étend parallèlement à l'axe du canal de manière à former un passage (22) coaxial au canal lorsqu'elles sont proches l'une de l'autre.

6. Dispositif de centrage selon la revendication 1, **caractérisé en ce que** chaque mâchoire (17, 18) comporte deux glissières (23, 24) de chaque côté, réalisées pour se mettre en prise à l'intérieur de deux guides coulissants correspondants sur chaque côté.

7. Dispositif de centrage selon la revendication 6, **caractérisé en ce que** les deux guides coulissants (19, 20) de chaque côté d'une mâchoire (17, 18) sont agencés en séquence le long du canal et avec le guide coulissant le plus éloigné de l'extrémité d'entrée qui a ladite première partie (26, 27) connectée à une extrémité terminale de ladite seconde partie inclinée (28, 29) du guide coulissant plus proche de l'extrémité d'entrée (15), de sorte que lesdits deux guides coulissants constituent une seule rainure, la rainure ayant une extrémité terminale (32, 33) qui est ouverte ou peut être ouverte dans la direction axiale du canal afin de permettre aux mâchoires (17, 18) de sortir manuellement du dispositif de centrage en coulissant avec les glissières respectives (23, 24) le long de ladite rainure unique jusqu'à et au-delà de ladite extrémité terminale (32, 33).

8. Dispositif de centrage selon la revendication 1, **caractérisé en ce qu'**il comprend un boîtier cylindrique (43) dont l'axe est dirigé de la même manière que l'axe du canal et contenant deux éléments de guidage (44, 45) qui sont fixés sur la paroi interne (43) du boîtier (43) sur des côtés opposés du canal de manière à avoir des surfaces agencées de manière opposée dans lesquelles les guides coulissants pour les mâchoires (17, 18) sont présents, les mâchoires étant situées entre lesdits deux éléments de guidage (44, 45) de manière à se mettre en prise de manière coulissante dans les guides coulissants et à se déplacer le long des guides dans des directions qui sont parallèles auxdites surfaces opposées des deux éléments de guidage (44, 45).

9. Dispositif de centrage selon les revendications 3 et 8, **caractérisé en ce que** le boîtier (43) présente vers l'extrémité de sortie (16) de la barre un bord périphérique (47) qui est dirigé vers l'axe du canal et sur lequel une première extrémité du ressort (25), agencée de manière coaxiale par rapport au canal, repose, le boîtier contenant une glissière annulaire pouvant coulisser (48), qui est agencée de manière coaxiale par rapport au canal et sur laquelle l'autre extrémité du ressort (25) repose afin de pousser avec la glissière (48) les mâchoires vers leur première position.

10. Dispositif de centrage selon la revendication 8, **caractérisé en ce qu'**à une extrémité du boîtier (43) vers l'extrémité d'entrée (15) il y a un élément de fermeture (50) qui a un passage central autour du canal (11) et qui est raccordé de manière amovible au boîtier (43) au moyen de moyens de fixation pouvant être dégagés (51, 54).

11. Dispositif de centrage selon la revendication 10, **caractérisé en ce que** les moyens de fixation comprennent au moins un élément de mise en prise (51) qui est sollicité par ressort vers l'extérieur du boîtier (43) afin de faire saillie d'une surface latérale du boîtier et se mettre en prise élastiquement à l'intérieur d'un trou (54) présent dans une paroi de l'élément de fermeture (50) reçu partiellement par le boîtier (43) à l'intérieur de ce dernier, et/ou **en ce que** l'élément de fermeture (50) comprend une tige creuse (55) qui s'étend de manière coaxiale par rapport au canal dans la direction opposée au boîtier (43) et qui supporte, via des moyens de roulement (56), une douille (57) prévue pour le montage par rotation axiale du dispositif de centrage.

12. Chargeur automatique (58) pour amener des barres (13) à un tour (60), comprenant un dispositif de centrage (10) qui est monté à l'extrémité d'un canal (68) du chargeur qui est prévu pour amener une barre (13) vers le tour, **caractérisé en ce que** le dispositif de centrage (10) est réalisé selon l'une quelconque des revendications précédentes pour guider des barres (13) poussées par un poussoir de barre (14) du chargeur (58) le long du canal (68) du chargeur et permettre au poussoir de barre de passer entre les mâchoires (17, 18) du dispositif de centrage (10) au moyen d'un mouvement radial des mâchoires (17, 18) suite à la poussée axiale du poussoir de barre (14) contre les mâchoires (17, 18).

13. Procédé de centrage d'une barre dans un dispositif de centrage (10) fabriqué selon l'une quelconque des revendications précédentes et disposé entre un chargeur de barres et un tour, comprenant les étapes consistant à positionner ledit dispositif de centrage (10) entre le chargeur et le tour avec les mâchoires rapprochées de manière à avoir ladite ouverture réglable qui est inférieure au diamètre d'un outil de préhension (14) du chargeur qui pousse une barre (13) à travers le dispositif de centrage et, à l'arrivée de l'outil de préhension (14) à l'intérieur du dispositif de centrage, à pousser avec l'outil de préhension (14) contre les surfaces de poussée (39, 40) des mâchoires de manière à ouvrir les mâchoires et permettre le passage guidé de l'outil de préhension (14) à travers le dispositif de centrage.
